# EUROPÄISCHE PATENTSCHRIFT

(11) **EP 3 583 909 B1**
(45) Veröffentlichungstag und Bekanntmachung des Hinweises auf die Patenterteilung: **19.05.2021**
(21) Anmeldenummer: 19173971.3
(22) Anmeldetag: 27.05.2014
(51) Int. Cl.: A61C 8/00, A61C 13/00

(54) **VERFAHREN ZUR ERZEUGUNG EINES ZAHNERSATZES**
METHOD FOR CREATING ARTIFICIAL TEETH
PROCÉDÉ DE PRODUCTION D'UNE PROTHÈSE DENTAIRE

(43) Veröffentlichungstag der Anmeldung: 25.12.2019
(62) Teilanmeldung aus: 14169982.7
(73) Patentinhaber: Ivoclar Vivadent AG, 9494 Schaan (LI)
(72) Erfinder: Burger, Goran, 9472 Grabs (CH)
(74) Vertreter: Baronetzky, Klaus

(56) Entgegenhaltungen:
- EP-A1- 2 025 303
- WO-A1-2006/031096
- WO-A1-2014/081843
- US-A1- 2012 295 223

## Beschreibung

Die Erfindung betrifft ein Verfahren zur Erzeugung eines Zahnersatzes gemäß dem Oberbegriff von Anspruch 1.

Zahnersatz wird häufig unter Zuhilfenahme eines Implantats im Mund eines Patienten befestigt. In diese Fällen wird typischerweise das Implantat nach Einbringung mit einem sogenannten Abutment versehen, welches formtreu mit dem Implantat in Verbindung steht, beispielsweise dadurch, dass die einander zugewandten Oberflächen von Implantat und Abutment unrund gestaltet sind. Die Befestigung selbst erfolgt dann über eine Abutmentschraube, die das Abutment durchdringt. Hierzu ist ein oberer Bereich des Abutments als Rohrabschnitt ausgebildet, dessen Innendurchmesser für die Aufnahme der Abutmentschraube ausreicht. Die Abutmentschraube liegt etwas unterhalb dieses Rohrabschnitts an einem meist etwas konischen Stützbereich auf, dessen Innendurchmesser kleiner als der Kopfdurchmesser der Abutmentschraube ist, durch welche hindurch aber der Schaft und das Gewinde der Abutmentschraube passt. Das Implantat weist dann in an sich bekannter Weise ein Innengewinde für den Gewindeeingriff mit dem Gewinde der Abutmentschraube auf.

Auf dem Abutment wird anschließend an die Befestigung des Abutments an dem Implantat eine Dentalstruktur befestigt. Hierzu ist der Rohrabschnitt oder obere Bereich des Abutments außen meist leicht konisch und passt formtreu in eine entsprechende Ausnehmung in der Dentalstruktur.

Derartige Lösungen werden seit etwa 30 Jahren eingesetzt; beispielhaft insofern sei auf die DE 32 41 963 C1 oder die GB 2 119 258 A verwiesen.

Gerade bei der Lösung gemäß letzterer Druckschrift besteht jedoch das Problem, dass die Drehposition der Dentalstruktur relativ zu dem Implantat nicht bzw. nicht eindeutig festgelegt ist. Eine insofern bessere und etwas neuere Lösung lässt sich aus der US 5,782,918 A1 entnehmen, die eine Rotationssicherung in Form einer Abflachung dem Rohrabschnitt des Abutments zeigt und insofern eine Rotationssicherung zwischen Implantat und Dentalstruktur realisiert.

Bei dieser Lösung ist lediglich eine einzige Größe bzw. Höhe des Abutments vorgesehen, die so klein gehalten ist, dass auch kompaktere Dentalstrukturen den Rohrabschnitt vollständig überdecken.

Demgegenüber ist es in neuerer Zeit vorgeschlagen worden, unterschiedliche Größen von Abutments bereitzuhalten, was einen entsprechenden Lageraufwand und gegebenenfalls auch Verwechslungsmöglichkeiten verursacht, oder aber dem Zahnarzt oder Zahntechniker einen kostenintensiven Nachbearbeitungsaufwand zu beschert, indem ihm selbst die Aufgabe der Anpassung an die Größenverhältnisse und die Mundsituation des Patienten überlassen wird.

Dies ist jedoch unbefriedigend, zumal der Zahnarzt oder Zahntechniker dann bei Größenveränderungen des Abutments, beispielsweise durch Trennen des Rohrabschnitts auf eine gewünschte Höhe, manchmal übersieht, dass eine ausreichende Tragfläche für die Kraftübertragung zur Verfügung stehen muss, um die eingeleiteten Scherkräfte bei den Kaubewegungen sicher und dauerhaft zu übertragen.

Durch entsprechende Veränderungen werden häufig auch die Gewährleistungsansprüche gegenüber dem Hersteller verletzt, so dass der Zahnarzt oder Zahntechniker das volle Haftungsrisiko trägt, was er aus verständlichen Gründen als unbefriedigend empfindet.

Ferner hat es sich gezeigt, dass es trotz einer an sich ausreichend dimensionierten Tragfläche zwischen Dentalstruktur und Implantat in Einzelfällen zu Materialbrüchen gekommen ist, gerade bei keramischen Dentalstrukturen die, im Vergleich mit aus Komposit bzw. aus Kunststoff bestehenden Dentalstrukturen eher zu Sprödbrüchen neigen.

Häufig sind im oberen Teil des Rohrabschnitts des Abutments auch Stege vorgesehen, die sich nach radial auswärts erstrecken und dafür bestimmt sind, mit entsprechenden Nuten in der Dentalstruktur in Eingriff zu stehen, um die erwünschte Rotationssicherung bereitzustellen. Wenn dieser Bereich nun kurzerhand abgesägt wird, steht die Verdrehsicherung nicht mehr zur Verfügung; wenn andererseits das Abutment für Pfeilerzähne einer Brücke verwendet wird, kann die insofern bestehende Rotationssicherung gegebenenfalls stören, da dann eine winkelgenaue Ausrichtung auf beispielsweise weniger als 1° erforderlich wäre, um Spannungen zu vermeiden.

Demgegenüber liegt der Erfindung die Aufgabe zugrunde, ein Verfahren zur Erzeugung eines Zahnersatzes gemäß dem Oberbegriff von Anspruch 1 zu schaffen, die in verbesserter Weise den Anforderungen an Zahnersatz, der aus Implantat, Abutment und Dentalstruktur besteht, Rechnung tragen und eine gewährleistungssichere Handhabung der Erzeugung des Zahnersatzes durch den Zahnarzt oder Zahntechniker ermöglicht.

Diese Aufgabe wird erfindungsgemäß durch Anspruch 1 gelöst. Vorteilhafte Weiterbildungen ergeben sich aus den Unteransprüchen.

EP2025303 offenbart die Merkmale des Oberbegriffs des Anspruchs 1.

Erfindungsgemäß besonders günstig ist es, dass die Erzeugungsvorrichtung selbst eine Selektionsvorrichtung für Abutments aufweist. Die per CAM erzeugte Dentalstruktur liegt in ihren Daten in der Erzeugungsvorrichtung vorab fest, so dass es erfindungsgemäß besonders günstig ist, dass die Belastbarkeit der Kraftübertragungsflächen zwischen Abutment und Dentalstruktur, die verbleibende Wandstärke der Dentalstruktur, die Winkelausrichtung, die Höhenlage usw. vorab und vorbestimmt von der Erzeugungsvorrichtung festlegbar ist. Erfindungsgemäß günstig ist es, dass damit basierend auf der bestehenden Dimensionierung der Abutments diese auswählbar sind und gleich auch der CAM-Vorrichtung die insofern angepasste Gestaltung der Lagerflächen der Dentalstruktur auf dem Abutment vorgegeben werden kann.

Erfindungsgemäß ist eine Zahnersatz-Erzeugungsvorrichtung vorgesehen, bei welcher der Zahnersatz ein Implantat und ein Abutment aufweist, auf oder an welchem eine unter Zuhilfenahme von CAM erzeugter Dentalstruktur aus Dentalwerkstoff, insbesondere aus Keramik und/oder Kunststoff, befestigbar ist, wobei das Abutment über eine lösbare Verbindung, insbesondere eine Schraubverbindung, an dem Implantat gelagert ist, welche lösbare Verbindung eine Verdrehsicherung aufweist, und wobei eine Rotationssicherung, ggf. unter Zwischenschaltung des Abutments, zwischen dem Implantat und der Dentalstruktur ausgebildet ist, wobei eine Selektionsvorrichtung für Abutments vorgesehen ist, über welche ein zu dem Implantat formkompatibles Abutment, gegebenenfalls nach patientenspezifischer Reduktion seiner Höhe auf vorgegebene Werte, für die Erzeugung des Zahnersatzes auswählbar ist.

In vorteilhafter Ausgestaltung der Erfindung ist es vorgesehen, dass mittels einer Zahnersatz-Erzeugungsvorrichtung über die Selektionsvorrichtung für den Zahnersatz ein Abutment auswählbar ist, das hinsichtlich des Durchmessers und des Typs zu dem Implantat und der Dentalstruktur passt, und hinsichtlich seiner Höhe gleich groß wie oder größer als eine standardisierte Höhe ist, und dass die Selektionsvorrichtung einer CAM-Vorrichtung Formdaten zuleitet, die sich auf die patientenspezifische Höhe des selektierten Abutments beziehen.

In vorteilhafter Ausgestaltung der Erfindung ist es vorgesehen, dass eine Zahnersatz-Erzeugungsvorrichtung, die gegebenenfalls vorgesehene Reduktion der Höhe des Abutments in zwei bis fünf, bevorzugt zwei bis drei standardisierten Längen, vornimmt ist, so dass das Abutment nach der standardisierten Höhenreduktion in der unveränderten Maximalhöhe, einer oder mehrerer mittleren Höhen oder einer Minimalhöhe vorliegt.

In vorteilhafter Ausgestaltung der Erfindung ist es vorgesehen, dass eine Zahnersatz-Erzeugungsvorrichtung die Erzeugungsvorrichtung eine CAM-Vorrichtung für die Fertigbearbeitung einer Dentalstruktur aufweist, die die Daten der zu fertigenden Dentalstruktur aus den Daten deren äußeren Geometrie und den des angepassten Abutments berechnet und an die CAM-Vorrichtung weiterleitet.

In vorteilhafter Ausgestaltung der Erfindung ist es vorgesehen, dass eine Zahnersatz-Erzeugungsvorrichtung die erwünschte Form des Zahnersatzes basierend auf einem extraoralen oder intraoralen 3D-Scan mit Hilfe eines Scankörpers, dessen zylindrische Geometrie eine Abschrägung oder kugelförmige Referenzfläche aufweist, festlegt, indem das Scanergebnis einer CAD-Vorrichtung zugeleitet wird, die basierend auf der Form von Nachbarzähnen zu dem erwünschten Zahnersatz eine virtuelle Form der zu erzeugenden Restaurationen bildet und diese - gegebenenfalls nach Benutzereingriff - virtuell aufteilt in ein Implantat, ein Abutment und eine Dentalstruktur.

In vorteilhafter Ausgestaltung der Erfindung ist es vorgesehen, dass die Selektionsvorrichtung mindestens ein Abutment eines Zahnersatzes, die eine Krone oder eine Brücke als Suprakonstruktion aufweist, in Abhängigkeit von der erwünschten konstruktiven Höhenlage dieser - bezogen insbesondere auf eine Okklusionsebene - auswählt und das Ausmaß der erforderlichen Kürzung des Abutments auf vorgegebene Standardhöhen zurückführt, zur Bereitstellung der erwünschten Höhenlage der Suprakonstruktion, und die so vorgegebenen Formdaten der CAM-Vorrichtung zuleitet.

In vorteilhafter Ausgestaltung der Erfindung ist es vorgesehen, dass das Abutment für die Bereitstellung des Zahnersatzes einen konischen oder zylindrischen Bereich aufweist, der mindestens eine Rille trägt, die sich über mindestens einen Teil der Höhe dieses Bereichs erstreckt.

Erfindungsgemäß ist ein Zahnersatz vorgesehen, mit einem Implantat und einem Abutment, auf oder an welchem eine Dentalstruktur aus verschiedenen Dentalwerkstoffen, insbesondere aus Keramik und/oder Kunststoff, befestigbar ist, wobei das Abutment über eine lösbare Verbindung, insbesondere eine Schraubverbindung, an dem Implantat gelagert ist, welche lösbare Verbindung eine Verdrehsicherung aufweist, und eine Rotationssicherung zwischen dem Abutment und der Dentalstruktur ausgebildet ist, wobei die Rotationssicherung an einem zylindrischen oder konischen Bereich des Abutments mindestens einer Rille (Nut), die sich über mindestens einen Teil der Höhe dieses Bereichs erstreckt, ausbildet, wobei die Rille an einem Endradius oder einer Endschräge des Abutments ausläuft, der bzw. die auch beim Kürzen des Bereichs formtreu erhalten bleibt.

In vorteilhafter Ausgestaltung der Erfindung ist es vorgesehen, dass der Bereich des Abutments zylindrisch ausgebildet ist und die mindestens eine Rille (Nut) sich von der Endschräge oder dem Endradius des Abutments aus bei ungekürztem Bereich über mindestens 70 % bevorzugt mindestens 80 % der Höhe des Bereichs erstreckt.

In vorteilhafter Ausgestaltung der Erfindung ist es vorgesehen, dass die Rille (Nut) zu einem Kragen des Abutments hin mit einer Schräge oder insbesondere mit einem Kragenradius ausläuft.

In vorteilhafter Ausgestaltung der Erfindung ist es vorgesehen, dass der Bereich des Abutments als Rohrabschnitt ausgebildet ist, dessen Wandstärke - abgesehen von der Rille (Nut) - über die Höhe oder im Wesentlichen gleichbleibend ist.

In vorteilhafter Ausgestaltung der Erfindung ist es vorgesehen, dass der Bereich des Abutments auch bei Kürzung in einem Endradius ausläuft, der mehr als ein Hundertstel und weniger als ein Drittel, insbesondere mehr als ein Dreißigstel und weniger als ein Sechstel, des Durchmessers des Bereichs beträgt.

In vorteilhafter Ausgestaltung der Erfindung ist es vorgesehen, dass der Zylinderbereich mehrere Rillen (Nuten) aufweist, die sich mindestens über Teilbereiche der Höhe des Zylinderbereichs des Abutments erstrecken und/oder dass mindestens eine Rille (Nut) vor dem Radius oder der Schräge des Kragens des Abutments, endet.

In vorteilhafter Ausgestaltung der Erfindung ist es vorgesehen, dass mindestens eine Rille (Nut) als Teilkreisnut ausgebildet ist, deren Nutenquerschnitt einem Teilkreis oder einem Kreisabschnitt entspricht, dessen Radius wesentlich geringer als der Radius des Abutments ist und insbesondere etwa so groß wie der Endradius oder der Kragenradius ist.

In vorteilhafter Ausgestaltung der Erfindung ist es vorgesehen, dass die Positivelemente des Rotationssicherung in der Dentalstruktur formtreu in die mindestens eine Rille (Nut) der negativen Rotationssicherungselemente eingreifen und/oder dass zusätzlich mindestens eine Rille (Nut) im zylindrischen oder konischen Teils des Abutments als Befestigungsmaterial-Ablaufkanal ausgebildet ist.

In vorteilhafter Ausgestaltung der Erfindung ist vorgesehen, dass ein Kragenradius zwischen dem Kragen und dem zylindrischen Bereich eine Zusatzrille bildet, und einen Befestigungsmaterial-Ablaufkanal bildet.

In vorteilhafter Ausgestaltung der Erfindung ist es vorgesehen, dass der Zahnersatz zwei oder mehrere Abutments mit unterschiedlich abgelängten Zylinderbereichen (Rohrabschnitte) aufweist, wobei jedes Abutment zusätzlich formtreu, insbesondere über einen oder mehrere Formfräser, auf die gewünschte Länge kürzbar ist.

In vorteilhafter Ausgestaltung der Erfindung ist es vorgesehen, dass das Abutment, insbesondere nach dem Kürzen, oberflächenverdichtet ist, insbesondere durch Anstrahlen mit einer körnigen Substanz und/oder dass das Abutment aus Keramik oder Kunststoff, aber insbesondere aus Metall, besonders bevorzugt aus Titan oder aus einer Titanlegierung besteht.

In vorteilhafter Ausgestaltung der Erfindung ist es vorgesehen, dass das Abutment eine einbis zweifarbige Beschichtung, insbesondere mit TiN oder einer Anodisierung zur Herstellung einer ästhetischen Abutmentoberfläche, insbesondere in helleren und der Zahnfarbe nahkommenden Farbtönen, aufweist und/oder dass das Abutment eine aufgeraute Oberfläche aufweist..

In vorteilhafter Ausgestaltung der Erfindung ist es vorgesehen, dass das individuell gekürzte Abutment gescannt und in die Zahnersatz-Erzeugungsvorrichtung übertragen wird.

In vorteilhafter Ausgestaltung lässt sich mit lediglich einem Abutment auskommen, das dann durch die CAM-Vorrichtung oder gegebenenfalls von dieser gesteuert über einen separaten Fräser auf eine patientenspezifische Höhe gekürzt werden kann. Damit lassen sich auch ohne weiteres die Nachteile der Kürzung durch Abtrennen, insbesondere Nachteile des Kürzens durch manuelles Abtrennen vermeiden; beispielsweise lassen sich durch die erfindungsgemäß vorteilhafte Ausgestaltung durch automatische Kürzung Schrägen oder Radien an dem oberen Ende des Rohrabschnitts des Abutments bereitstellen, so dass die beobachteten Sprödbrüche von keramischen Dentalstrukturen, die durch punktuelle Zugspannungen an den Innenecken der Dentalstrukturen ausgelöst wurden, sicher vermieden werden können.

In erfindungsgemäß vorteilhafter Ausgestaltung ist es vorgesehen, eine Nut oder eine Mehrzahl von Nuten vorzusehen, die sich vertikal nahezu über die gesamte Höhe des oberen Bereichs des Abutments, der hier auch als Rohrabschnitt bezeichnet wird, erstreckt oder erstrecken. Diese Ausgestaltung der Rotationssicherung hat den Vorteil, dass sie insofern auch dann greift, wenn gemäß der vorteilhaften Ausgestaltung die Höhe des Rohrabschnitts reduziert wird. Ferner lässt sich durch Realisierung von Stegen nach dem Nut/Feder-Prinzip in der radialen Innenseite der Dentalstruktur die erfindungsgemäße Rotationssicherung mit der erwünschten Zuverlässigkeit gewährleisten.

Wenn andererseits der erfindungsgemäße Zahnersatz als Brücke ausgestaltet ist, so dass eine zusätzliche Rotationssicherung nicht nur nicht erwünscht, sondern auch störend ist, werden kurzerhand von der CAM-Vorrichtung die entsprechenden Stege weggelassen bzw. nicht erstellt, so dass die erwünschte Verdrehbarkeit zur spannungsfreien Lagerung der Brücke gegeben ist.

Dass eine ausgesprochen hohe Präzision der Passung zwischen der Dentalstruktur und dem Abutment erfindungsgemäß realisierbar ist, hindert nicht das Vorsehen einer vorgesehenen Klebefuge, die insbesondere zur Einstellung der Nachgiebigkeit des Zahnersatzes gegenüber dem Antagonisten dient.

Durch die erfindungsgemäße CAM-Fertigung lässt sich vielmehr der erwünschte Klebespalt mit einer ausgesprochen großen Genauigkeit, beispielsweise 50µ, einstellen.

Erfindungsgemäß besonders günstig ist es, dass die Fehler, die bislang bei der Höhenanpassung des Abutments vorkamen, gleichsam automatisch unterdrückt werden. Durch die Fräsbearbeitung sind die Kurven und Radien, wie sie belastungstechnisch limitiert vorliegen können, automatisch vorgegeben. Eine versehentliche Reduktion und damit Verminderung der Auflagefläche ist ebenso ausgeschlossen wie eine versehentliche Verwechslung der je an die betreffende Dentalstruktur angepassten Abutments. Eine Nacharbeitung wie Aufrauen oder dergleichen ist nicht erforderlich; vielmehr kann im Rahmen der CAM-Fertigung beispielsweise auch eine Beschichtung und damit einhergehend eine erwünschte Farbgebung des Abutments in beliebiger geeigneter Weise vorgenommen werden, wobei es sich versteht, dass bei der Beschichtung der Rauhigkeitsgrad an die Erfordernisse angepasst wird.

Die Kürzung des oberen Bereich des Abutments lässt sich in beliebiger geeigneter Weise auf Standardmaße vornehmen, so dass auch die Ausgestaltung der Innenflächen der Dentalstruktur in Standardmaßen vorgenommen werden kann.

Als Rotationssicherung kann hierbei die Ausgestaltung der vorstehend erläuterten Nutenanordnung in dem oberen Bereich des Implantats eingesetzt werden, aber beispielsweise auch eine entsprechende unrunde Gestaltung an einem Kragen des Implantats, der mit der Dentalstruktur in Eingriff steht.

In vorteilhafter Ausgestaltung ist es vorgesehen, dass die erwünschte Form des Zahnersatzes basierend auf einem extraoralen oder intraoralen 3D-Scan mit Hilfe eines Scankörpers, dessen zylindrische Geometrie eine Abschrägung oder kugelförmige Referenzfläche aufweist, um die Festlegung und Übertragung von Ausgangssituation (Modell) in 3D-Daten (Scan) zu ermöglichen, festgelegt wird. Hierzu wird das Scanergebnis einer CAD-Vorrichtung zugeleitet, die basierend auf der Form von Nachbarzähnen zu dem erwünschten Zahnersatz eine virtuelle Form der zu erzeugenden Restauration bildet und diese - gegebenenfalls nach Benutzereingriff - virtuell aufteilt in ein Implantat, ein Abutment und eine Dentalstruktur.

Hier sei unter Abutment jede beliebige Mesostruktur, also eine beliebige Struktur verstanden, die sich zwischen dem Implantat und der Dentalstruktur, die auch als Suprastruktur bezeichnet wird, erstreckt, wobei es sich versteht, dass dem Grunde nach einteilige, aber auch mehrteilige Abutment-Dentalstrukturen realisierbar sind.

Es versteht sich, dass die Außenfläche des Rohrabschnitts des Abutments in beliebiger geeigneter Weise mit Abflusskanälen für Klebstoff versehen sein kann, die bei Bedarf auch mit Rotationssicherungselementen, also entsprechenden Nuten oder anderen Negativformen an der Außenfläche des Rohrabschnitts kombinierbar sind. Besonders bevorzugt in diesem Zusammenhang ist die Realisierung einer Hohlkehle am Übergang zwischen dem Rohrabschnitt und dem Kragen des Abutments. Diese Hohlkehle ist typischerweise außerhalb des Anlagebereichs, also des Bereichs, an dem das Abutment an der Dentalstruktur anliegt und ist daher einer geringen Flächenpressung ausgesetzt. Überschüssiger Klebstoff kann mit einer entsprechend geeigneten Ausgestaltung einer länglichen bzw. ringförmigen Vertiefung dort in geeigneter Weise abgeführt werden.

Der Kragen des Abutments verläuft anschließend an diese Hohlkehle im Wesentlichen vertikal nach außen und weist eine recht geringe axiale Höhe auf, die zwischen 0,1mm und 1mm, 0,1mm und 2mm und zwischen 0,1mm und 0,5mm betragen kann. Dies erlaubt eine Anpassung an das im Emergenzprofil in anatomisch günstiger Weise.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: Eine perspektivische schematische Darstellung eines erfindungsgemäßen Zahnersatzes;
- Fig. 2: die Ausführungform gemäß Fig. 1, jedoch im Schnitt;
- Fig. 3: eine modifizierte Ausführungsform eines erfindungsgemäßen Zahnersatzes gemäß Fig. 1;
- Fig. 4: die Ausführungsform gemäß Fig. 3 im Schnitt;
- Fig. 5: eine weitere modifizierte Ausführungsform des erfindungsgemäßen Zahnersatzes in perspektivischer Darstellung;
- Fig 6: die Ausführungsform gemäß Fig. 5 im Schnitt;
- Fig. 7: eine Ansicht einer weiteren Ausführungsform eines erfindungsgemäßen Zahnersatzes in der Seitenansicht;
- Fig. 8: die Ausführungsform gemäß Fig. 7 in der Draufsicht;
- Fig. 9: die Ausführungsform gemäß Fig. 7 und 8 im Schnitt; und
- Fig. 10: eine schematische Darstellung einer erfindungsgemäßen Zahnersatz-Erzeugungsvorrichtung in dem für die Erfindung relevanten Teil.

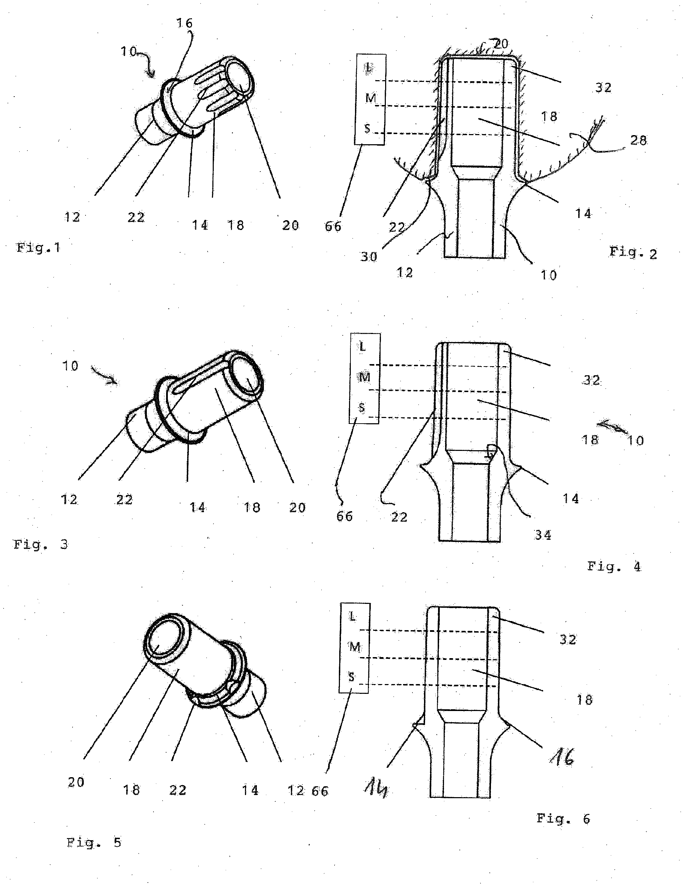

In Fig. 1 ist ein Abutment 10 als Teil eines Zahnersatzes dargestellt, das mit einem Implantat zur Erzeugung einer Dentalstruktur (vgl. Fig. 2) verbindbar ist.

Das Abutment 10 weist einen Implantatanschluss 12 auf, welcher in der Lage ist, sich drehfest an einem Implantat abzustützen. Die insofern realisierte Verdrehsicherung kann beispielsweise über eine hexagonale Außenform oder eine hexagonale Innenform realisiert sein.

Oberhalb des Implantatanschlusses 12 ist ein Kragen 14 ausgebildet, der über einen recht großen Radius (vgl Fig. 2) in den Implantatanschluss 12 übergeht. Der Kragen 14 läuft recht spitz zu und endet oben in einem Innenradius 16, der noch deutlich kleiner als der Radius gegenüber dem Implantatanschluss 12 ist.

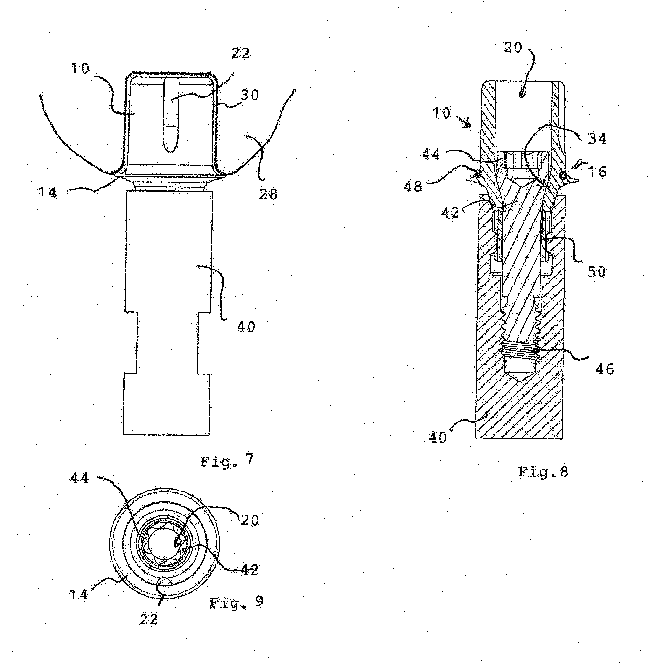

Anschließend an den Kragen 14 erstreckt sich von diesem ausgehend ein Rohrabschnitt 18 oder oberer Bereich des Abutments. Der Rohrabschnitt 18 weist eine zentrale Ausnehmung 20 auf, die für die Aufnahme einer Implantatschraube (vgl Fig. 8) geeignet ist. Der Rohrabschnitt 18 weist zu seinem oberen Ende hin einen leicht konischen Verlauf auf; der Konuswinkel beträgt beispielsweise 3°.

Für die Bereitstellung einer Rotationssicherung zwischen dem Implantat einerseits und der Dentalstruktur andererseits weist das Abutment 10 eine Mehrzahl von gleichmäßig um den Umfang verteilte Nuten 22 auf, die sich nach oben offen und unten über eine Hohlkehle geschlossen vertikal erstrecken.

Aus Fig. 2 ist ersichtlich, in welcher Weise sich eine Dentalstruktur 28 an den Rohrabschnitt 18 anschließen kann. Wie in Fig. 2 schematisch angedeutet ist, erstreckt sich ein Klebespalt 30 zwischen der Dentalstruktur 28 einerseits und dem Kragen 14 und dem Rohrabschnitt 18 andererseits. Die Dentalstruktur 28 weist Stege auf, die nach einwärts gewandt sind und dafür bestimmt sind, in die Nuten 22 des Rohrabschnitts 18 einzudringen, um die Verdrehsicherung zu gewährleisten.

Aus Fig. 2 ist auch ersichtlich, dass das Implantat grundsätzlich in mehreren Längen vorliegen kann. Die hier vorgestellten drei unterschiedlichen Längen unterscheiden sich lediglich in der Höhe des Rohrabschnitts 18, während die Form des Implantats im Übrigen keine Unterschiede zeigt.

Sämtlichen Formen "L", "M" und "S" ist gemeinsam, dass sie in einem Endradius 32 enden. Hierdurch werden Kerbwirkungen gegenüber der Dentalstruktur 28 verhindert.

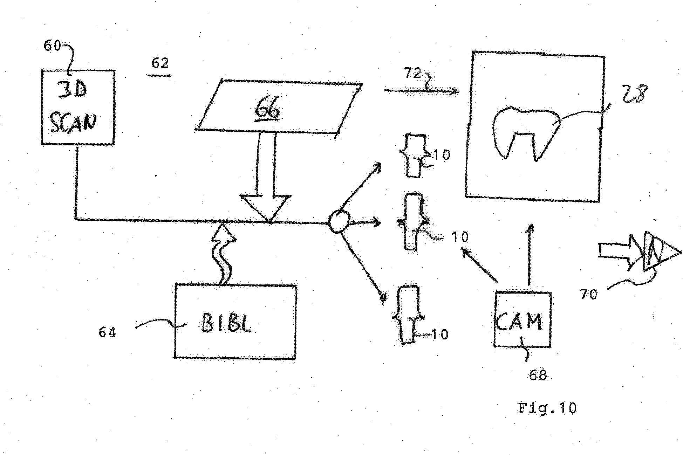

Die erfindungsgemäße Selektionsvorrichtung (Fig. 10) wählt nun in Abhängigkeit von der Größe und Form der Dentalstruktur 28 die passende Form aus. Zusätzlich ist bei Bedarf eine Feinabstimmung möglich, indem über die CAD-/CAM-Vorrichtung (Fig. 10) die exakte gewünschte Höhe des Rohrabschnitts 18 festgelegt wird.

Die Höheneinstellung und Selektion erfolgt auch zahntypspezifisch: Während Frontzähne typischerweise eher schmal und hoch sind, weisen Molare Dentalmaterial in approximaler bzw. bukkal/lingualer Richtung auf.

Die durch Kaukräfte eingeleiteten Scherkräfte sind bei Molaren dementsprechend größer, aber aufgrund der größeren Wandstärke in dem den Rohrabschnitt 18 umgebenden Bereich sind Molare auch stabiler, so dass eine höhere Flächenpressung im Rohrabschnitt 18 möglich ist. Die Tiefe der Nuten 22 beträgt in dem dargestellten Ausführungsbeispiel etwa die halbe Wandstärke des Rohrabschnitts 18, und es versteht sich, dass bei Bedarf die Selektionsvorrichtung für Frontzähne auch ein Abutment auswählen kann, das eine etwas verminderte Wandstärke hat, beispielsweise 0,5mm anstatt von 0,6mm. Hierdurch kann die Wandstärke der Dentalstruktur noch etwas vergrößert werden.

Erfindungsgemäß ist es besonders günstig, dass die Selektionsvorrichtung basierend auf dem bereits feststehenden Ergebnis, also des fest zu erzeugenden Zahnersatzes, automatisch ein geeignetes Abutment auswählt und dieses gegebenenfalls patientenspezifisch anpasst, in seiner Höhe reduziert oder im Übrigen anpasst.

Es versteht sich, dass das Abutment zu dem Implantat formkompatibel ist, wie es aus Fig. 8 ersichtlich ist.

Bei der Auswahl des Abutments selektiert die Selektionsvorrichtung ein solches, das in seiner Höhe gleich groß oder größer als eine Zielhöhe ist, so dass stets ausreichend Material für die gegebenenfalls erforderliche spanabhebende Bearbeitung vorliegt.

Erfindungsgemäß wichtig ist es hierbei, dass auch bei der spanabhebenden oder Fräsbearbeitung der Endradius 32 gleichsam automatisch angebracht bzw. beibehalten wird.

Die Zahnersatz-Erzeugungsvorrichtung erstellt hierbei mindestens auch den inneren Aufbau der Dentalstruktur 28 in geeigneter Weise und angepasst an das Ergebnis der Auswahl der Selektionsvorrichtung und auch im Übrigen an die Form des je für die Erstellung des Zahnersatzes verwendeten Abutments 10.

Nachdem die äußere Form der Dentalstruktur 28 bereits basierend auf einer Erfassung der Mundsituation des Patienten über einen 3D-Scan festgelegt werden kann, ist es auch möglich und besonders günstig, wenn das Scanergebnis basierend auf der Form von Nachbarzähnen zu dem zu erzeugenden Zahnersatz eine virtuelle Form der zu erzeugenden Restauration bildet und zugleich die Aufteilung dieser Form in Implantat, Abutment und Dentalstruktur vornimmt.

Hierbei kann die Erzeugungsvorrichtung sich bevorzugt auf eine Abutmentbibliothek beziehen, die in Abhängigkeit von der Art des Zahnersatzes eine gewisse Anzahl von Größen des Abutments bereithält, wobei die Erzeugungsvorrichtung dann größenabhängig auch die aufzufangenden Kräfte berücksichtigt und die Selektionsvorrichtung das Abutment basierend auch hierauf auswählt.

Es versteht sich, dass hierbei auch die Höhenlage der Okklusionsfläche der Dentalstruktur bevorzugt berücksichtigt wird, dass also das Abutment soweit gekürzt wird oder in kürzerer Form von der Selektionsvorrichtung ausgewählt wird, dass ausreichend Dentalwerkstoff, also beispielsweise Keramik, zwischen dem oberen Ende des Abutments und der Okklusionsfläche zur Verfügung steht.

Bevorzugt erstreckt sich die Nut 22 oder auch die Vielzahl der Nuten 22 über einen beträchtlichen Bereich der Höhe des Rohrabschnitts 18 des Abutments 10.

Bei einer Mehrzahl von Nuten 22 sind die Flächen, die für die Übertragung von Drehmomenten zur Verfügung stehen, größer als bei der Realisierung lediglich einer Nut (Fig. 3 und Fig. 4), so dass hier auch eine Teilabdeckung der Höhe des Rohrabschnitts 18 ausreicht, wie es aus Fig. 2 ersichtlich ist. Auch bei der geringsten Höhe oder stärksten Kürzung gemäß "S" steht immer noch ein Teil der Nutenhöhe 22 für die Rotationssicherung zur Verfügung.

Aus Fig. 3 ist demgegenüber eine Ausführungsform eines Abutments 10 mit lediglich einer Nut 22 ersichtlich. Diese erstreckt sich, wie es aus Fig. 4 ersichtlich ist, bis zum Kragen 14, so dass auch bei stärkstem Kürzen des Rohrabschnitts 18 noch ausreichend drehmomentaktive Fläche zur Verfügung steht.

Bevorzugt weist auch die Rille (Nut 22) je einen Endradius oder eine Hohlkehle auf, um insofern Steifigkeitssprünge des Abutments zu vermeiden.

Die Wandstärke des Rohrabschnitts kann ausgehend vom Kragen 14 zum Endradius 32 hin konstant sein, oder um weniges, beispielsweise um 10% bis 15% abnehmen, wobei es sich versteht, dass der Innendurchmesser der Rohrabschnitts 18 über die Höhe konstant ist, nachdem in der Ausnehmung 20 in einer Implantatschraube mit ihrem Kopf ausgenommen werden muss.

In an sich bekannter Weise weist das Abutment 10 im Bereich des Kragens oder knapp oberhalb einen Innenkonus 34 auf, an welchem der Kopf der Implantatschraube anliegt.

Aus Fig. 5 ist eine demgegenüber noch weiter modifizierte Ausgestaltung ersichtlich. Bei dieser Lösung ist die Rotationssicherung durch eine Nut 22 im Bereich des Kragens 14 realisiert, während der Rohrabschnitt 18 frei von Nuten oder Rillen (Nuten 22) ist.

Auch wenn aus Fig. 5 und Fig. 6 lediglich zwei Nuten 22 oder Rillen 18 im Bereich des Kragens 14 ersichtlich sind, versteht es sich, dass bevorzugt eine Vielzahl von entsprechenden Nuten vorgesehen sind, um die für die Übertragung von Drehmomenten geeigneten Flächen zu maximieren.

Aus Fig. 7 ist ein Abutment in in das Implantat eingeschraubter Position etwas vergrößert ersichtlich. Der Bereich zwischen dem Kragen 14 und dem oberen Ende des Implantats 40 wird in an sich bekannter Weise zur Bereitstellung eines geeigneten Emergenzprofils mit Zahnzement geglättet; durch die geringe Höhe des Kragens 14 lässt sich hier in weiten Bereichen eine patientenspezifische Anpassung ermöglichen.

Wichtig ist insofern der Übergang zur Dentalstruktur 28, die über den Klebespalt 30 mit dem Abutment 10 in Verbindung steht.

Es versteht sich, dass als Füllmaterial für den Klebespalt 30 ein beliebiger geeigneter biokompatibler Klebstoff oder Zahnzement verwendet werden kann.

Aus Fig. 8 ist ersichtlich, in welcher Weise eine Implantatschraube 42 in die Ausnehmung 20 einbringbar ist. Der Schraubenkopf ist beispielsweise mit einer in Richtung einer TORX-Struktur modifizierten Inbus-Struktur versehen und der Schraubenkopf 44 füllt radial die Ausnehmung 20 nahezu vollständig aus.

Aus Fig. 9 ist ersichtlich, dass die Implantatschraube 42 zur Bereitstellung der Schraubverbindung 46 mit ihrem Schraubenkopf 44 über dessen Konusauflage an dem Innenkonus 34 des Abutments anliegt. Auch Schrauben mit senkrechter bis flacher Schulter kommen hierfür in Betracht, deshalb ist ferner ersichtlich, dass zwischen dem Implantat 40 und dem Abutment 10 eine Verdrehsicherung 50 realisiert ist, beispielsweise in Form von zueinander passenden hexagonalen Flächen.

Es versteht sich, dass das Implantat 40 in der Praxis mit einem an sich bekannten Außengewinde versehen ist, auch wenn dies in den Figuren hier nicht dargestellt ist.

Wie aus Fig. 8 ersichtlich ist, ist im Bereich des Innenradius 16 ein Unterschnitt 48 ausgebildet, der der Aufnahme von ablaufendem Klebstoff dient. Ferner ist es bei dieser Ausführungsform vorgesehen, das Abutment nach dem gegebenenfalls vorgenommenen Kürzen oberflächenzuverdichten, beispielsweise durch Anstrahlen mit einer körnigen Substanz.

In einer weiteren modifizierten Ausführungsform ist es anstelle dessen vorgesehen, das Abutment mit einer ein- oder zweifarbigen Beschichtung zu versehen.

Aus Fig. 10 ist der schematische Aufbau einer Zahnersatz-Erzeugungsvorrichtung 62 ersichtlich.

Zunächst wird über eine Scanvorrichtung 60 die Mundsituation des Patienten, insbesondere auch die Nachbarzähne des zu erzeugenden Zahnersatzes, gescannt. Die Scandaten liegen damit in der Zahnersatz-Erzeugungsvorrichtung 62 vor. Basierend hierauf entwickelt die Zahnersatz-Erzeugungsvorrichtung 62 in an sich bekannter Weise einen Zahnersatz, beispielsweise als virtuelle Mischform zwischen den beiden Nachbarzähnen oder in einer sonstigen beliebigen geeigneten passenden Weise, entsprechend der Stellung des Zahnersatzes im Mund des Patienten.

Die Zahnersatz-Erzeugungsvorrichtung 62 liegt damit die Außenform der Dentalstruktur 28 fest, einschließlich auch der Höhenlage zur Bereitstellung einer geeigneten Okklusionsfläche (bzw. Inzisalfläche) gegenüber dem Antagonisten des Zahnersatzes.

Neben der Höhenlage und Position ist damit auch die äußere Form der Dentalstruktur festgelegt, also auch die Abmessungen der Dentalstruktur in approximaler und lingual/bukkaler Richtung. Basierend hierauf und basierend auf den Daten einer Bibliothek 64 aus Abutments (und ggf. auch Implantaten) wird von einer Selektionsvorrichtung 66 ein geeignetes Abutment ausgewählt. Das Abutment 10 wird so ausgewählt, dass seine Höhe passend zu dem virtuellen Innenraum des Zahnersatzes ist, das also ausreichend Dentalkeramikmaterial für die Auflage an dem Rohrabschnitt 28 zur Verfügung steht. Ferner wird die Wandstärke der Dentalstruktur als Randbedingung bei der Auswahl berücksichtigt, beispielsweise mit>1mm bei Frontzähnen und>2mm bei Molaren und Prämolaren.

Es versteht sich, dass diese Werte in weiten Bereichen an die Erfordernisse anpassbar sind.

Die Selektionsvorrichtung 66 ist Teil einer CAD-Station und legt basierend hierauf das geeignete Abutment fest, das dann gegebenenfalls zur Optimierung noch gekürzt wird. Hierzu dient eine CAM-Vorrichtung 68, die den insofern anfallenden Formungsschritt vornimmt und insbesondere auch den Endradius 32 des Abutments je automatisch mitformt.

Ferner übermittelt die Selektionsvorrichtung 66 auch Formdaten 72 für die Bereitstellung der Innenform der Dentalstruktur 28, die von der CAM-Vorrichtung 68 erzeugt wird.

Es versteht sich, dass anstelle dessen auch ein separater Fräser für die Behandlung des Abutments 10 realisierbar ist.

Bevorzugt wird ferner in einem Prüfschritt 70 auch zugleich überprüft, ob die Innenfläche der Dentalstruktur 28 passend zu dem je bearbeitenden Abutment 10 ist. Dies kann entweder durch Einpassung - ohne Klebstoff - oder aber durch einen Scan erfolgen, für den die Scanvorrichtung 60 ebenfalls erneut eingesetzt werden kann.

Hierbei wird wiederum im Rahmen eines Prüfschritts überprüft, ob die Passung zutreffen bzw. ausreichend ist, um die erwünschte Höhenlage einerseits, aber momentensichere Lagerung andererseits zu gewährleisten.

Erforderlichenfalls wird dann in einem Nachbearbeitungsschritt 70 wiederum über die CAM-Vorrichtung 28 eine Nachbearbeitung vorgenommen.

## Patentansprüche

1. Verfahren zur Erzeugung eines Zahnersatzes, welches ein Implantat (40), eine Dentalstruktur (28) und ein Abutment (10) aufweist, auf oder an welchem die Dentalstruktur (28) aus verschiedenen Dentalwerkstoffen, insbesondere aus Keramik und/oder Kunststoff, befestigt wird, wobei das Abutment (10) über eine lösbare Verbindung, insbesondere eine Schraubverbindung (44), an dem Implantat (40) gelagert wird, welche lösbare Verbindung eine Verdrehsicherung (50) aufweist, und eine Rotationssicherung zwischen dem Abutment (10) und der Dentalstruktur (28) ausgebildet ist, **dadurch gekennzeichnet, dass** die Rotationssicherung an einem zylindrischen oder konischen Bereich des Abutments (10) mindestens eine Rille (22), die sich über mindestens einen Teil der Höhe dieses Bereichs erstreckt, ausbildet, wobei das Abutment *durch die CAM-Vorrichtung oder von dieser gesteuert* über einen separaten Fräser auf eine patientenspezifische Höhe gekürzt wird, wobei die Rille an einem Endradius (32) oder einer Endschräge des Abutments (10) ausläuft, der bzw. die bei dem Kürzen des Bereichs formtreu erhalten bleibt.

2. Verfahren nach Anspruch 1, **dadurch gekennzeichnet, dass** der Bereich des Abutments (10) bei der Kürzung in einem Endradius ausläuft, der mehr als ein Hundertstel und weniger als ein Drittel, insbesondere mehr als ein Dreißigstel und weniger als ein Sechstel, des Durchmessers des Bereichs beträgt.

3. Verfahren nach Anspruch 1 oder 2, **dadurch gekennzeichnet, dass** der Endradius (32) beim Kürzen mittels spanabhebender Bearbeitung oder Fräsbearbeitung automatisch angebracht oder beibehalten wird.

4. Verfahren nach einem der vorhergehenden Ansprüche, **dadurch gekennzeichnet, dass** der Bereich des Abutments (10) als Rohrabschnitt (18) ausgebildet ist, dessen Wandstärke - abgesehen von der Rille (22) - über die Höhe im Wesentlichen gleichbleibend ist, und/oder dass die Rille (22) zu einem Kragen (14) des Abutments (10) hin mit einer Schräge oder insbesondere mit einem Kragenradius ausläuft.

5. Verfahren nach einem der vorhergehenden Ansprüche , **dadurch gekennzeichnet, dass** der Kragen des Abutments anschließend an eine Hohlkehle im Wesentlichen vertikal nach außen verläuft und in einer geringen axialen Höhe zwischen 0,1 mm und 1 mm, insbesondere zwischen 0,1 und 0,5 mm ausgebildet wird.

6. Verfahren nach einem der vorhergehenden Ansprüche, **dadurch gekennzeichnet**, **dadurch gekennzeichnet, dass** das Abutment (10), insbesondere nach dem Kürzen, oberflächenverdichtet wird, insbesondere durch Anstrahlen mit einer körnigen Substanz und/oder dass das Abutment (10) aus Keramik oder Kunststoff, aber insbesondere aus Metall, besonders bevorzugt aus Titan oder aus einer Titanlegierung besteht.

7. Verfahren nach Anspruch 1, **dadurch gekennzeichnet, dass** der Bereich des Abutments (10) zylindrisch ausgebildet wird und die mindestens eine Rille (22) sich von der Endschräge oder dem Endradius des Abutments (10) aus bei ungekürztem Bereich über mindestens 70 % bevorzugt mindestens 80 % der Höhe des Bereichs erstreckt, und insbesondere mindestens eine Rille (22) vor dem Radius oder der Schräge des Kragens (14) des Abutments (10) endet.

8. Verfahren nach einem der vorhergehenden Ansprüche, **dadurch gekennzeichnet, dass** mindestens eine Rille (22) als Teilkreisnut ausgebildet wird, deren Nutenquerschnitt einem Teilkreis oder einem Kreisabschnitt entspricht, dessen Radius wesentlich geringer als der Radius des Abutments (10) ist und insbesondere etwa so groß wie der Endradius oder der Kragenradius ist.

9. Verfahren nach einem der vorhergehenden Ansprüche, **dadurch gekennzeichnet, dass** die Positivelemente der Rotationssicherung in der Dentalstruktur (28) formtreu in die mindestens eine Rille (22) der negativen Rotationssicherungselemente eingreifen

10. Verfahren nach einem der vorhergehenden Ansprüche, dass zusätzlich mindestens eine Rille (22) im zylindrischen oder konischen Teil des Abutments (10) als Befestigungsmaterial-Ablaufkanal ausgebildet ist und /oder dass ein Kragenradius zwischen dem Kragen (14) und dem zylindrischen Bereich eine Zusatzrille bildet, und einen Befestigungsmaterial-Ablaufkanal bildet.

11. Verfahren nach einem der vorhergehenden Ansprüche, **dadurch gekennzeichnet, dass** zu dem Zahnersatz zwei oder mehrere Abutments (10) mit unterschiedlich abgelängten Zylinderbereichen gehören, und dass jedes Abutment (10) zusätzlich formtreu, insbesondere über einen oder mehrere Formfräser, auf die gewünschte Länge gekürzt wird.

12. Verfahren nach einem der vorhergehenden Ansprüche, **dadurch gekennzeichnet, dass** das individuell gekürzte Abutment (10) gescannt und in die Zahnersatz-Erzeugungsvorrichtung übertragen wird,
und dass insbesondere durch Einpassung oder durch einen Scan geprüft wird, ob die Innenfläche der Dentalstruktur (28) passend zu dem Abutment (10) ist.

13. Verfahren zur Erzeugung eines Zahnersatzes nach einem der vorhergehenden Ansprüche, **dadurch gekennzeichnet, dass** über eine Selektionsvorrichtung (66) für Abutments (10) ein zu dem Implantat (40) formkompatibles Abutment (10), insbesondere nach patientenspezifischer Reduktion der Höhe seines Rohrabschnitts auf vorgegebene Werte für die Erzeugung des Zahnersatzes ausgewählt wird, wobei über eine CAD-/CAM-Vorrichtung die exakte gewünschte Höhe des Rohrabschnitts (18) festgelegt wird, wobei die Rille an einem Endradius (32) oder einer Endschräge des Abutments (10) ausläuft, *der bzw. die* bei dem Kürzen des Bereichs formtreu erhalten bleibt.

14. Verfahren zur Erzeugung eines Zahnersatzes nach einem der vorhergehenden Ansprüche, **dadurch gekennzeichnet, dass** die gegebenenfalls vorgesehene Reduktion der Höhe des Abutments (10) in zwei bis fünf, bevorzugt zwei bis drei standardisierten Längen vorgenommen wird, so dass das Abutment (10) nach der standardisierten Höhenreduktion in der unveränderten Maximalhöhe, einer oder mehrerer mittleren Höhen oder einer Minimalhöhe vorliegt.

15. Verfahren nach einem der vorhergehenden Ansprüche, **dadurch gekennzeichnet, dass** die Erzeugungsvorrichtung eine CAM-Vorrichtung für die Fertigbearbeitung einer Dentalstruktur (28) aufweist, die die Daten der zu fertigenden Dentalstruktur (28) aus den Daten deren äußeren Geometrie und den des angepassten Abutments (10) berechnet und an die CAM-Vorrichtung weiterleitet.

16. Verfahren nach einem der vorhergehenden Ansprüche, **dadurch gekennzeichnet, dass** die Selektionsvorrichtung (66) mindestens ein Abutment (10) eines Zahnersatzes, die eine Krone oder eine Brücke als Suprakonstruktion aufweist, in Abhängigkeit von der erwünschten konstruktiven Höhenlage dieser - bezogen insbesondere auf eine Okklusionsebene - auswählt und das Ausmaß der erforderlichen Kürzung des Abutments (10) auf vorgegebene Standardhöhen zurückführt, zur Bereitstellung der erwünschten Höhenlage der Suprakonstruktion, und die so vorgegebenen Formdaten der CAM-Vorrichtung zuleitet.

## Claims

1. A method for creating artificial teeth comprising an implant (40), a dental structure (28) and an abutment (10), on which or to which the dental structure (28) made of different dental materials, especially of ceramic and/or plastic, is mounted, the abutment (10) being mounted on the implant (40) via a releasable connection, in particular a screw connection (44), which releasable connection comprises an anti-rotation device (50), and an anti-rotation device being formed between the abutment (10) and the dental structure (28), **characterized in that** the anti-rotation device forms at least one groove (22) at a cylindrical or conical region of the abutment (10), which groove extends across at least part of the height of this region, the abutment being truncated to a patient-specific height using a separate milling cutter under the control of the CAM device, the groove terminating at an end radius (32) or an end chamfer of the abutment (10), which groove or chamfer is or are formed during truncation of the region and remaining true to shape when truncation the region.

2. The method according to claim 1, **characterized in that** the region of the abutment (10) tapers off during truncation into an end radius that is more than one hundredth and less than one third, especially more than one thirtieth and less than one sixth, of the diameter of the region.

3. The method according to claims 1 or 2, **characterized in that** the end radius (32) is automatically applied or maintained during truncation by machining or milling.

4. The method according to one of the preceding claims, **characterized in that** the region of the abutment (10) is formed as a tube portion (18), the wall thickness of which - apart from the groove (22) - is substantially constant across the height, and/or **in that** the groove (22) tapers with a slope or especially with a collar radius towards a collar (14) of the abutment (10).

5. The method according to one of the preceding claims, **characterized in that** the collar of the abutment substantially extends vertically outwards adjacent to a fillet and is formed at a low axial height of between 0.1 mm and 1 mm, especially between 0.1 and 0.5 mm.

6. The method according to one of the preceding claims, **characterized in that** the abutment (10), especially after truncation, is surface compacted, especially by blasting with a granular substance and/or **in that** the abutment (10) is made of ceramic or plastic, but especially of metal, particularly preferably of titanium or of a titanium alloy.

7. The method according to claim 1, **characterized in that** the region of the abutment (10) is cylindrically formed and the at least one groove (22) extends from the end slope or the end radius of the abutment (10) across at least 70%, preferably at least 80%, of the height of the region if the region is not truncated, and
especially at least one groove (22) terminates in front of the radius or the slope of the collar (14) of the abutment (10).

8. The method according to one of the preceding claims, **characterized in that** at least one groove (22) is formed as a pitch circle groove, the groove cross-section of which corresponds to a pitch circle or a circular section, the radius of which is substantially smaller than the radius of the abutment (10) and is especially approximately as large as the end radius or the collar radius.

9. The method according to one of the preceding claims, **characterized in that** the positive elements of the anti-rotation device in the dental structure (28) form-fittingly engage into the at least one groove (22) of the negative anti-rotation elements.

10. The method according to one of the preceding claims, **characterized in that** additionally at least one groove (22) in the cylindrical or conical part of the abutment (10) is formed as a luting material drainage channel and/or **in that** a collar radius between the collar (14) and the cylindrical region forms an additional groove, and forms a luting material drainage channel.

11. The method according to one of the preceding claims, **characterized in that** the artificial teeth include two or more abutments (10) having differently truncated cylindrical regions, and **in that** each abutment (10) is additionally truncated to the desired length in a true-to-shape manner, especially using one or more shaping cutters.

12. The method according to one of the preceding claims, **characterized in that** the individually truncated abutment (10) is scanned and transferred to the artificial teeth creating device, and **in that** it is examined whether the inner surface of the dental structure (28) matches the abutment (10), especially by fitting or by scanning.

13. The method for creating artificial teeth according to one of the preceding claims, **characterized in that**, using a selection device (66) for abutments (10), an abutment (10) shape-compatible to the implant (40) is selected for creating the artificial teeth, especially after patient-specifically reducing the height of the tubular portion thereof to predetermined values, wherein the exact desired height of the tubular portion (18) is determined using a CAD/CAM device, wherein the groove terminates at an end radius (32) or an end chamfer of the abutment (10) which end radius (32) or end chamfer remains true to shape when truncating the region.

14. The method for creating artificial teeth according to one of the preceding claims, **characterized in that** reduction of the height of the abutment (10) optionally provided is performed using two to five, preferably two to three standardized lengths, such that the abutment (10), following the standardized height reduction, is present having the unchanged maximum height, one or more medium heights or in a minimum height.

15. The method according to one of the preceding claims, **characterized in that** the creating device comprises a CAM device for finishing a dental structure (28), which calculates the data of the dental structure (28) to be finished from the data of the outer geometry thereof and those of the adapted abutment (10), and forwarding them to the CAM device.

16. The method according to one of the preceding claims, **characterized in that** the selection device (66) selects at least one abutment (10) of artificial teeth, which comprises a crown or a bridge as a superstructure, as a function of the desired constructive height position thereof - related especially to an occlusal plane - and reduces the extent of the required truncation of the abutment (10) to predetermined standard heights, to provide the desired height position of the superstructure, forwarding the shape data thus predetermined to the CAM device.

## Revendications

1. Procédé de fabrication d'une prothèse dentaire, qui présente un implant (40), une structure dentaire (28) et un pilier (10), sur lequel ou contre lequel est fixée la structure dentaire (28) en différents matériaux dentaires, en particulier en céramique et/ou en matière plastique, où le pilier (10) est monté sur l'implant (40) par l'intermédiaire d'une liaison amovible, en particulier d'une liaison vissée (44), qui présente un dispositif anti-rotation (50), et un blocage en rotation est formé entre le pilier (10) et la structure dentaire (28), **caractérisé en ce que** sur une zone cylindrique ou conique du pilier (10) le blocage en rotation forme au moins une rainure (22) qui s'étend sur au moins une partie de la hauteur de cette zone, où le pilier est raccourci à une hauteur spécifique au patient par le dispositif CAM ou commandé par celui-ci via une fraise séparée, où la rainure se termine au niveau d'un rayon d'extrémité (32) ou d'une pente d'extrémité du pilier (10) dont la forme est conservée lorsque la zone est raccourcie.

2. Procédé selon la revendication 1, **caractérisé en ce que** la zone du pilier (10) se termine par un rayon d'extrémité lors du raccourcissement qui est supérieur à un centième et inférieur à un tiers, en particulier supérieur à un trentième et inférieur à un sixième, du diamètre de la zone.

3. Procédé selon la revendication 1 ou 2, **caractérisé en ce que** le rayon d'extrémité (32) est automatiquement appliqué ou maintenu pendant le raccourcissement par usinage ou fraisage.

4. Procédé selon l'une des revendications précédentes, **caractérisé en ce que** la zone du pilier (10) est réalisée sous la forme d'un tronçon de tube (18) dont l'épaisseur de paroi - à l'exception de la rainure (22) - est sensiblement constante sur la hauteur, et/ou **en ce que** la rainure (22) se rétrécit vers un collier (14) du pilier (10) avec une pente ou en particulier avec un rayon de collier.

5. Procédé selon l'une des revendications précédentes, **caractérisé en ce que** le collier du pilier avoisinant une gorge creuse s'étend sensiblement verticalement vers l'extérieur et est formée à une faible hauteur axiale comprise entre 0,1 mm et 1 mm, en particulier entre 0,1 et 0,5 mm.

6. Procédé selon l'une des revendications précédentes, **caractérisé en ce que** le pilier (10), en particulier après raccourcissement, est compacté en surface, en particulier par sablage avec une substance granuleuse et/ou **en ce que** le pilier (10) est en céramique ou en plastique, mais en particulier en métal, de manière particulièrement préférée en titane ou en un alliage de titane.

7. Procédé selon la revendication 1, **caractérisé en ce que** la zone du pilier (10) est de forme cylindrique et ladite au moins une rainure 22) s'étend depuis la pente d'extrémité ou le rayon d'extrémité du pilier (10) sur au moins 70 %, de préférence au moins 80 %, de la hauteur de la zone lorsque la zone n'est pas taillée, et en particulier au moins une rainure 22) se termine avant le rayon ou la pente du collier (14) du pilier (10).

8. Procédé selon l'une des revendications précédentes, **caractérisé en ce qu'**au moins une rainure 22) est réalisée sous la forme d'une rainure de cercle primitif, dont la section transversale1 correspond à un cercle primitif ou à une section de cercle, dont le rayon est sensiblement inférieur au rayon du pilier (10) et en particulier approximativement égal au rayon d'extrémité ou au rayon du collier.

9. Procédé selon l'une quelconque des revendications précédentes, **caractérisé en ce que** les éléments positifs de l'élément de blocage en rotation de la structure dentaire (28) s'engage dans ladite au moins une rainure (22) des éléments de blocage en rotation négatifs par complémentarité de forme.

10. Procédé selon l'une des revendications précédentes, en ce qu'en outre au moins une rainure (22) dans la partie cylindrique ou conique du pilier (10) est formée en tant que canal d'écoulement de matériau de fixation et/ou en ce qu'un rayon de collier entre le collier (14) et la partie cylindrique forme une rainure supplémentaire, et forme un canal d'écoulement de matériau de fixation.

11. Procédé selon l'une des revendications précédentes, **caractérisé en ce que** la prothèse dentaire comprend deux ou plusieurs piliers (10) avec des zones cylindriques coupées à des longueurs différentes, et **en ce que** chaque pilier (10) est en outre raccourci à la longueur souhaitée, en particulier par l'intermédiaire d'une ou plusieurs fraises de mise en forme.

12. Procédé selon l'une des revendications précédentes, **caractérisé en ce que** le pilier (10) raccourci individuellement est scanné et transféré au dispositif de génération de prothèses dentaires, et **en ce qu'**il est vérifié, notamment par ajustage ou par scannage, si la surface intérieure de la structure dentaire (28) est adaptée au pilier (10).

13. Procédé de réalisation d'une prothèse dentaire selon l'une des revendications précédentes, **caractérisé en ce qu'**au moyen d'un dispositif de sélection (66) de piliers (10), un pilier (10) de forme compatible avec l'implant (40) est sélectionné, en particulier après réduction spécifique au patient de la hauteur de sa section tubulaire à des valeurs prédéterminées, pour la fabrication de la prothèse dentaire, où la hauteur exacte souhaitée de la section tubulaire (18) est déterminée au moyen d'un dispositif CAO/FAO, où la rainure débouche sur un rayon d'extrémité (32) ou une pente d'extrémité du pilier (10) dont la forme est conservée lorsque la zone est raccourcie.

14. Procédé de fabrication d'une prothèse dentaire selon l'une des revendications précédentes, **caractérisé en ce que** la réduction de la hauteur du pilier (10), prévue de manière optionnelle, est réalisée en deux à cinq, de préférence deux à trois longueurs standardisées, de manière que le pilier (10), après la réduction de hauteur standardisée, présente la hauteur maximale inchangée, une ou plusieurs hauteurs moyennes ou une hauteur minimale.

15. Procédé selon l'une quelconque des revendications précédentes, **caractérisé en ce que** le dispositif de génération comprend un dispositif de FAO pour la finition d'une structure dentaire (28), qui calcule les données de la structure dentaire (28) à finir à partir des données de sa géométrie externe et de celles du pilier adapté (10) et les transmet au dispositif de FAO.

16. Procédé selon l'une des revendications précédentes, **caractérisé en ce que** le dispositif de sélection (66) sélectionne au moins un pilier (10) d'une prothèse dentaire, qui présente une couronne ou un pont en tant que superstructure, en fonction de la position en hauteur constructive souhaitée de celle-ci - en particulier par rapport à un plan d'occlusion - et réduit l'ampleur du raccourcissement nécessaire du pilier (10) à des hauteurs standard prédéterminées, afin de fournir la position en hauteur souhaitée de la superstructure, et transmet les données de forme ainsi prédéterminées au dispositif CAM,
